# EUROPEAN PATENT SPECIFICATION

(11) **EP 2 939 895 B1**
(45) Date of publication and mention of the grant of the patent: **06.06.2018**
(21) Application number: 13869565.5
(22) Date of filing: 26.12.2013
(51) Int. Cl.: B60W 50/08, B60W 10/08, B60W 10/06, B60W 10/115, B60W 30/18, F02N 11/08, F16H 61/08, F16H 61/02, B60L 7/10, B60L 3/00

(54) **VEHICLE CONTROL DEVICE**
FAHRZEUGSTEUERUNGSVORRICHTUNG
DISPOSITIF DE COMMANDE DE VÉHICULE

(30) Priority: 28.12.2012 JP 2012287451
(43) Date of publication of application: 04.11.2015
(73) Proprietor: Mitsubishi Jidosha Kogyo Kabushiki Kaisha, Tokyo 108-8410 (JP)
(72) Inventor: INADA, Hitoshi, Tokyo 108-8410 (JP); IWANAGA, Fumiaki, Tokyo 108-8410 (JP); TAKEDA, Atsushi, Tokyo 108-8410 (JP)
(74) Representative: Vossius & Partner Patentanwälte Rechtsanwälte mbB
(86) International application number: PCT/JP2013/085003
(87) International publication number: WO 2014/104254

(56) References cited:
- WO-A1-2012/123486
- DE-A1-102007 050 504
- JP-A- H0 674 321
- JP-A- H1 132 404
- JP-A- 2002 029 289
- JP-A- 2003 343 305
- JP-A- 2006 288 071
- JP-A- 2007 276 542
- JP-A- 2008 213 699
- JP-A- 2009 264 513
- JP-A- 2010 007 749
- JP-A- 2010 281 398
- JP-A- 2012 255 384
- JP-A- 2012 255 492
- US-A1- 2011 307 130

## Description

### [Technical Field]

This invention relates to a vehicle control device provided with a drive mode taking a fuel saving into consideration among drive modes.

### [Background Art]

In a vehicle equipped with an engine, such as an automobile, engine control is exercised, for example, based on an engine speed or an engine load. Normally, engine control optimal for the operating state of the engine is performed. If necessary, fuel saving control for the engine in consideration of fuel economy has come to be performed. In recent years, moreover, technologies have found practical use, such as so-called idle stop control, by which the engine is automatically stopped during vehicle stoppage such as a wait for traffic lights to change, and the engine is automatically restarted at the time of starting the vehicle; or neutral control for lowering the degree of engagement of a forward clutch of an automatic transmission during vehicle stoppage, thereby producing a state close to a neutral state (see, for example, Patent Document 1).

Patent Document 2 relates to a transmission controller. The transmission controller comprises a continuously variable transmission continuously transmitting and outputting engine rotation speed and a control means which selects one mode between a normal transmission mode and a false stepped up-shift mode according to the magnitude of acceleration demanded by the driver. The control means also controls a transmission ratio of the continuously variable transmission based on the selected mode.

### [Prior Art Documents]

### [Patent Documents]

[Patent Document 1] JP-A-2012-132421
[Patent Document 2] JP-A-2010-007749

### [Summary of the Invention]

### [Problems to be solved by the invention]

Executing a plurality of types of fuel saving control, including the above-described control technologies, can be expected to achieve further fuel savings. Under the current circumstances, however, if the plural types of fuel saving control are exercised, it is necessary, for example, to perform an ON-OFF operation separately for each type of control by means of individual switches. In other words, switch operations by a driver become so complicated that each type of fuel saving control may fail to be effected appropriately, and a sufficient improvement in fuel consumption may be unachievable.

The present invention has been accomplished in the light of the above-described circumstances. It is an object of this invention to provide a vehicle control device which can perform various types of fuel saving drive control appropriately by simple operations.

### [Means for solving the problems]

A first aspect of the present invention for solving the above problems is a vehicle control device, comprising: a selection means for selecting, through an occupant of a vehicle, a drive mode for the vehicle from a plurality of drive modes including a first drive mode, a second drive mode taking a fuel saving into more consideration than the first drive mode, and a third drive mode taking a fuel saving into more consideration than the second drive mode; and a drive control means for controlling the activation state of a fuel saving drive control means in accordance with the drive mode selected by the selection means, wherein the fuel saving drive control means includes a neutral control means for bringing an automatic transmission of the vehicle into a neutral state when predetermined neutral conditions are established, and an idle stop control means for automatically stopping an engine of the vehicle when predetermined automatic stop conditions are established, and restarting the engine during automatic stoppage whenpredetermined restart conditions are established, and the drive control means exercises control over the activation states of at least the neutral control means and the idle stop control means in accordance with the drive mode selected by the selection means, and prohibits activation of the neutral control means and the idle stop control means when the first drive mode is selected by the selection means, permits the activation of the neutral control means and also prohibits the activation of the idle stop control means when the second drive mode is selected, and permits the activation of the idle stop control means when the third drive mode is selected.

According to the first aspect, the occupant only selects the desired drive mode by a switch operation or the like, thereby becoming able to arbitrarily change the activation states of neutral control and idle stop control collectively, thus achieving an improvement in usability. Moreover, the activation states of neutral control and idle stop control contribute highly to fuel economy, and the sensation of activation of control is relatively easy to feel. As noted here, the activation states of neutral control and idle stop control are changed in association with the switching of the drive mode. As a result, it becomes easier for the occupant of the vehicle to experience a difference in fuel consumption according to the drive mode, and a change of the drive mode. Consequently, the occupant can detect maloperation of the selection means or an abnormality in control at an early stage.

A second aspect of the present invention is the vehicle control device according to the first aspect, wherein the fuel saving drive control means includes a regenerative control means for controlling the braking force of a regenerative brake of the vehicle, and the drive control means sets the upper limit value of the braking force of the regenerative brake, which is controlled by the regenerative control means, at a second upper limit value higher than a first upper limit value set upon selection of the first drive mode, when the second drive mode is selected by the selection means, and sets the above upper limit value at a third upper limit value higher than the second upper limit value, when the third fuel saving drive mode is selected.

According to such a second aspect, the mere selection of the drive mode collectively changes the upper limit value of the braking force of the regenerative brake as well. Thus, a difference in fuel consumption according to the drive mode is apt to appear noticeable, and the occupant more easily experiences a change of the drive mode.

A third aspect of the present invention is the vehicle control device according to the first or second aspect, wherein the fuel saving drive control means includes a shift schedule control means for controlling the timing of upshift of each gear stage in the automatic transmission of the vehicle based on a preset shift schedule, and the drive control means sets the shift schedule to a second shift schedule, in which the timing of upshift of each gear stage is set to be earlier than a first shift schedule set upon selection of the first drive mode, when the second drive mode is selected by the selection means, and sets the shift schedule to a third shift schedule, in which the timing of upshift of each gear stage is set to be even earlier than the second shift schedule, when the third drive mode is selected.

According to such a third aspect, the timing of upshift is changed according to the switching of the drive mode. Thus, a difference in fuel consumption according to the drive mode is apt to appear more noticeable.

A fourth aspect of the present invention is the vehicle control device according to any one of the first to third aspects, wherein the fuel saving drive control means includes a shift schedule control means for controlling the timing of downshift of each gear stage in the automatic transmission of the vehicle based on a preset shift schedule, and the drive control means sets the shift schedule to a second shift schedule, in which the timing of downshift of each gear stage is set to be later than a first shift schedule set upon selection of the first drive mode, when the second drive mode is selected by the selection means, and sets the shift schedule to a third shift schedule, in which the timing of downshift of each gear stage is set to be even later than the second shift schedule, when the third drive mode is selected.

According to such a fourth aspect, the timing of downshift is changed according to the switching of the drive mode. Thus, a difference in fuel consumption according to the drive mode is apt to appear more noticeable.

A fifth aspect of the present invention is the vehicle control device according to the third or fourth aspect, further comprising a travel state detection means for detecting the travel state of the vehicle, wherein the drive control means changes the shift schedule to the first shift schedule when the vehicle is detected by the travel state detection means to be travelling on a sloping road, with the second or third drive being selected by the selection means.

According to such a fifth aspect, even when the second or third drive mode is selected, a decline in drivability can be suppressed, by adopting the same shift schedule as that in the first drive mode during a travel on a sloping road. That is, a braking force by an engine brake becomes easy to ensure for a downward sloping road, while a desired torque becomes easy to ensure for an upward sloping road.

A sixth aspect of the present invention is the vehicle control device according to any one of the first to fifth aspects, wherein the fuel saving drive control means includes an acceleration smoothening control means for limiting the acceleration degree of the vehicle to be controlled based on the accelerator opening of the vehicle, and the drive control means sets a limitation on the acceleration degree by the acceleration smoothening control means at a second limiting value, which is rendered higher than a first limiting value set upon selection of the first drive mode, when the second drive mode is selected by the selection means, and sets the limitation on the acceleration degree by the acceleration smoothening control means at a third limiting value, which is rendered even higher than the second limiting value, when the third drive mode is selected by the selection means.

According to such a sixth aspect, the mere selection of the drive mode collectively changes the state of limitation on the acceleration degree as well. Thus, a difference in fuel consumption according to the drive mode is apt to appear more noticeable, and the occupant more easily experiences a change of the drive mode.

A seventh aspect of the present invention is the vehicle control device according to any one of the first to sixth aspects, wherein the drive control means permits the activation of more types of the fuel saving drive control means than those upon selection of the first drive mode when the second drive mode is selected by the selection means, and permits the activation of even more types of the fuel saving drive control means than those upon selection of the second drive mode when the third drive mode is selected.

According to such a seventh aspect, the number of the fuel saving drive control means available according to the drive mode is changed. As a result, a difference in fuel consumption according to the drive mode is apt to appear more noticeable.

An eighth aspect of the present invention is the vehicle control device according to any one of the first to seventh aspects, further comprising a travel state detection means for detecting the travel state of the vehicle, wherein the fuel saving drive control means includes a regenerative control means for controlling the braking force of a regenerative brake of the vehicle, and the drive control means suppresses the activation of the regenerative control means when the vehicle is detected by the travel state detection means to be travelling on an upward sloping road, with the second or third drive mode being selected by the selection means.

According to such an eighth aspect, the activation of the regenerative brake is suppressed during a travel on an upward sloping road. By so doing, deceleration of the vehicle not intended by the driver can be suppressed.

A ninth aspect of the present invention is a vehicle control device, comprising: a selection means for selecting, through an occupant of a vehicle, a drive mode for the vehicle from a plurality of drive modes including a first drive mode, a second drive mode taking a fuel saving into more consideration than the first drive mode, and a third drive mode taking a fuel saving into more consideration than the second drive mode; and a drive control means for controlling the activation state of a fuel saving drive control means in accordance with the drive mode selected by the selection means, wherein the fuel saving drive control means includes a neutral control means for bringing an automatic transmission of the vehicle into a neutral state when predetermined neutral conditions are established, and an idle stop control means for automatically stopping an engine of the vehicle when predetermined automatic stop conditions are established, and restarting the engine during automatic stoppage when predetermined restart conditions are established, and the drive control means exercises control over the activation states of at least the neutral control means and the idle stop control means in accordance with the drive mode selected by the selection means, and prohibits the activation of the neutral control means and the idle stop control means when the first drive mode is selected by the selection means, permits the activation of the idle stop control means when the second drive mode is selected, and permits the activation of both the neutral control means and the idle stop control means when the third drive mode is selected.

According to such a ninth aspect, the occupant only selects the desired drive mode by a switch operation or the like, thereby becoming able to arbitrarily change the activation states of neutral control and idle stop control collectively, thus achieving an improvement in usability. Moreover, the activation states of neutral control and idle stop control are changed in association with the switching of the drive mode. As a result, it becomes easier for the occupant of the vehicle to experience a difference in fuel consumption according to the drive mode, and a change of the drive mode. Consequently, the occupant can detect maloperation of the selection means or an abnormality in control at an early stage.

A tenth aspect of the present invention is a vehicle control device, comprising: a selection means for selecting, through an occupant of a vehicle, a drive mode for the vehicle from a plurality of drive modes including a first drive mode, a second drive mode taking a fuel saving into more consideration than the first drive mode, and a third drive mode taking a fuel saving into more consideration than the second drive mode; and a drive control means for controlling the activation state of a fuel saving drive control means in accordance with the drive mode selected by the selection means, wherein the fuel saving drive control means includes a neutral control means for bringing an automatic transmission of the vehicle into a neutral state when predetermined neutral conditions are established, and an idle stop control means for automatically stopping an engine of the vehicle when predetermined automatic stop conditions are established, and restarting the engine during automatic stoppage when predetermined restart conditions are established, and the drive control means exercises control over the activation states of at least the neutral control means and the idle stop control means in accordance with the drive mode selected by the selection means, and permits the activation of the neutral control means and also prohibits the activation of the idle stop control means when the first drive mode is selected by the selection means, prohibits the activation of the neutral control means and also permits the activation of the idle stop control means when the second drive mode is selected, and permits the activation of both the neutral control means and the idle stop control means when the third drive mode is selected.

According to such a tenth aspect, the occupant only selects the desired drive mode by a switch operation or the like, thereby becoming able to arbitrarily change the activation states of neutral control and idle stop control collectively, thus achieving an improvement in usability. Moreover, the activation states of neutral control and idle stop control are changed in association with the switching of the drive mode. As a result, it becomes easier for the occupant to experience a difference in fuel consumption according to the drive mode, and a change of the drive mode. Consequently, the occupant can detect maloperation of the selection means or an abnormality in control at an early stage.

### [Effects of the Invention]

According to the present invention, as described above, the driver (occupant) merely selects the desired drive mode by a switch operation or the like, thereby becoming able to arbitrarily change the activation states of neutral control and idle stop control collectively, thus achieving an improvement in usability. Moreover, the activation states of neutral control and idle stop control, which contribute highly to fuel economy, and with which the activation of control is relatively easy to experience, are changed in association with the switching of the drive mode. As a result, it becomes easier for the occupant to experience a difference in fuel consumption according to the drive mode, and a change of the drive mode. Consequently, the occupant can detect maloperation of the selection means or an abnormality in control at an early stage.

### [Brief Description of the Drawings]

[Fig. 1] is a block diagram showing the schematic configuration of a vehicle control device according to Embodiment 1 of the present invention.
[Fig. 2] is a table showing the contents of control in each drive mode by drive control means according to Embodiment 1.
[Fig. 3] is a table showing the contents of control in each drive mode by drive control means according to Embodiment 2.
[Fig. 4] is a table showing the contents of control in each drive mode by drive control means according to Embodiment 3.
[Fig. 5] is a block diagram showing the schematic configuration of a vehicle control device according to Embodiment 4 of the present invention.
[Figs. 6(a), 6(b)] are tables showing the contents of control in each drive mode by drive control means according to Embodiment 4.
[Fig. 7] is a block diagram showing the schematic configuration of a vehicle control device according to Embodiment 5 of the present invention.
[Fig. 8] is a table showing the contents of control in each drive mode by drive control means according to Embodiment 5.

### [Mode for Carrying Out the Invention]

Embodiments of the present invention will now be described in detail by reference to the accompanying drawings.

### (Embodiment 1)

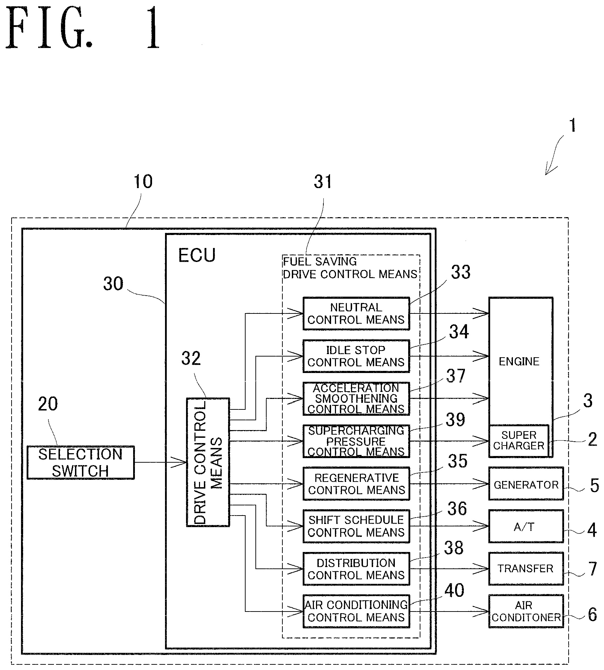

As shown in Fig. 1, a vehicle control device 10 according to Embodiment 1 of the present invention achieves a fuel saving, for example, by switching the drive mode of a vehicle 1 from a first drive mode, which is a normal drive mode, to a second or third drive mode, which is a fuel saving drive mode, in response to a demand from an occupant such as a driver, and controlling, as appropriate, various devices loaded on the vehicle 1 in accordance with each such drive mode.

The illustrated vehicle 1 is equipped with an engine 3 having a supercharger (turbocharger) 2, an automatic transmission (A/T) 4, a generator (alternator) 5, and an air conditioner 6. The vehicle 1 is a part time four wheel drive car, and is equipped with a transfer 7 for distributing a driving force from the engine 3 to front wheels and rear wheels. The "part time four wheel drive car", referred to here, includes not only a vehicle in which switching between a two wheel drive and a four wheel drive is performed by the driver's operation, but also a vehicle in which switching between a two wheel drive and a four wheel drive takes place automatically according to road surface conditions, etc. (i.e., on-demand vehicle).

The vehicle control device 10 is provided with a selection switch 20 as a selection means, and an electronic controlled unit (ECU) 30. The selection switch 20 is composed of, say, a dial switch, and selects the desired drive mode when operated by the driver. Concretely, through operation of the selection switch 20, the normal drive mode, or the fuel saving drive mode taking a fuel saving into more consideration than the normal drive mode is selected as the drive mode of the vehicle. With the present embodiment, the selection switch 20 is configured to be capable of selecting the drive mode in three stages, "the first drive mode (ECO Mode Off)" which is the normal drive mode, "the second drive mode (ECO Mode: Level 1)" which is the fuel saving drive mode taking a fuel saving into more consideration than the normal drive mode, and "the third drive mode (ECO Mode : Level 2) " taking a fuel saving into more consideration than the second drive mode. The configuration of the selection switch 20 is not limited and, for example, may be constituted by a toggle switch or the like.

The ECU 30 is composed of input/output devices, storage devices for storing a control program, a control map, etc., a central processing unit, timers and counters. The ECU 30 according to the present embodiment is also equipped with a fuel saving drive control means 31, and a drive control means 32, as shown in a block diagram as Fig. 1.

The fuel saving drive control means 31 controls, as appropriate, various devices loaded on the vehicle 1 in accordance with the drive mode to cut down on the consumption of fuel. In the present embodiment, the fuel saving drive control means 31 includes a neutral control means 33, an idle stop control means 34, a regenerative control means 35, a shift schedule control means 36, an acceleration smoothening means 37, a distribution control means 38, a supercharging pressure control means 39, and an air conditioning control means 40.

The drive control means 32 controls the activation states of the predetermined means constituting the fuel saving drive control means 31 in accordance with the drive mode selected by the selection switch 20. As will be described in detail later, the drive control means 32 permits or prohibits the activation of the predetermined means in accordance with each drive mode, and changes, as appropriate, the activation conditions for the predetermined means in accordance with each drive mode.

The neutral control means 33, one of the fuel saving drive control means 31, exercises neutral control for bringing the automatic transmission 4 of the vehicle into a neutral state when predetermined neutral conditions are established, for example, while the vehicle 1 is stopping in order to wait for the traffic lights to change. The idle stop control means 34 exercises idle stop control for stopping the engine 3 of the vehicle when predetermined automatic stop conditions are established, and restarting the engine 3 during an automatic stoppage when predetermined restart conditions are established. A fuel saving of the order of 1% can be made by executing the above-mentioned neutral control, and a fuel saving of the order of 6% can be made by executing the idle stop control. Detailed explanations for the neutral control and the idle stop control are omitted, because these controls themselves are publicly known technologies.

The regenerative control means 35 exercises regenerative control for controlling the braking force of the regenerative brake of the vehicle 1. Concretely, the regenerative control means 35 controls, as appropriate, the resisting force (braking force) of the generator (alternator) 5 of the vehicle 1 functioning as the regenerative brake. The braking force of the regenerative brake (resisting force of the generator 5) has a preset upper limit value, and the regenerative control means 35 controls the braking force of the regenerative brake with a value in a range not exceeding the upper limit value. As noted here, the regenerative control means 35 normally maximizes the braking force of the regenerative brake, and minimizes the fuel consumed by the engine 3 for driving the generator 5, thereby achieving a fuel saving.

The shift schedule control means 36 exercises shift schedule control for controlling the timing of upshift or downshift of each gear stage in the automatic transmission 4 of the vehicle 1 based on a preset shift schedule. The acceleration smoothening control means 37 exercises acceleration smoothening control for limiting the degree of acceleration of the vehicle 1, which is controlled based on the accelerator opening of the vehicle 1, based on a predetermined limiting value.

The distribution control means 38 exercises division control for controlling, as appropriate, the transfer 7 to change the proportion of distribution of the driving force of the engine 3 to the front wheels and the rear wheels. That is, the transfer 7 is controlled to switch between four wheel drive control (4WD control) and two wheel drive control (2WD control) . In the present embodiment, the distribution control means 38 optionally changes 4WD control to 2WD control during execution of 4WD control. The supercharging pressure control means 39 limits the maximum value of the supercharging pressure of the turbocharger 2 when a predetermined drive mode is selected by the selection switch 20. The air conditioning control means 40 is actuated upon selection of a predetermined drive mode by the selection switch 20 to limit the operation of an air conditioning compressor in the air conditioner 6, or the amount, temperature, etc. of conditioned air.

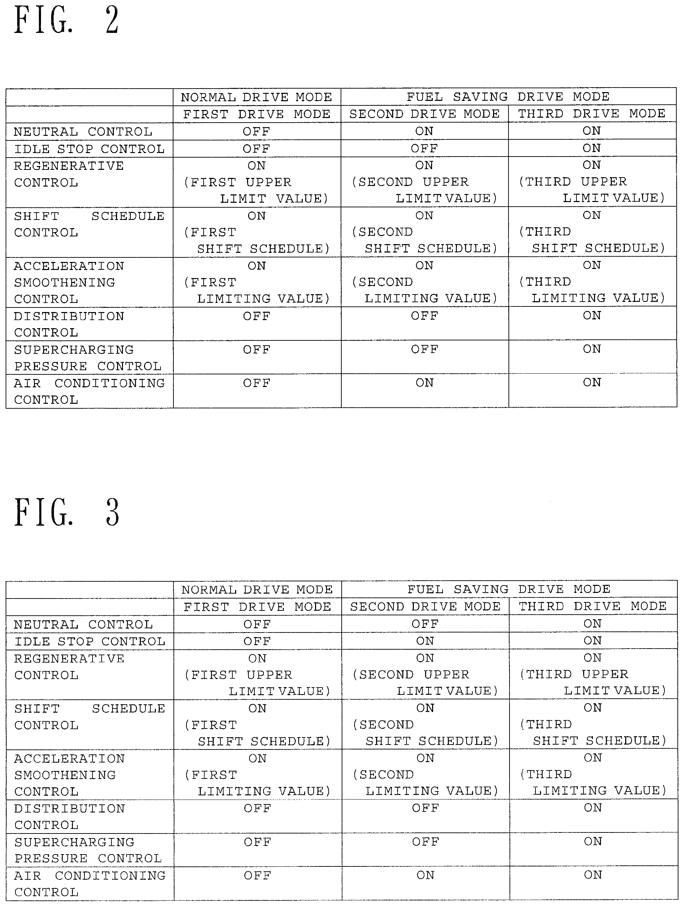

The drive control means 32 controls, as appropriate, the activation states of the predetermined means constituting the fuel saving drive control means 31 in accordance with each drive mode selected by the selection switch 20. Concretely, the drive control means 32 controls, as appropriate, the activation states of at least the neutral control means 33 and the idle stop control means 34, depending on which of the first to third drive modes is selected by the selection switch 20. In the present embodiment, as shown in Fig. 2, when the first drive mode is selected by the selection switch 20, the drive control means 32 prohibits the activation of the neutral control means 33 and the idle stop control means 34 (OFF) . When the second drive mode is selected, the drive control means 32 permits the activation of the neutral control means 33 (ON), and prohibits the activation of the idle stop control means 34 (OFF) . When the third drive mode is selected, the drive control means 32 also permits the activation of the idle stop control means 34 (ON).

In the present embodiment, the drive control means 32 permits the activation of both the neutral control means 33 and the idle stop control means 34 when the third drive mode is selected by the selection switch 20, but may prohibit the activation of the neutral control means 33 (OFF) and permit only the activation of the idle stop control means 34 (ON).

In the present embodiment, the drive control means 32 controls the activation states of not only the neutral control means 33 and the idle stop control means 34, but also the regenerative control means 35, the shift schedule control means 36, the acceleration smoothening control means 37, the distribution control means 38, the supercharging pressure control means 39, and the air conditioning control means 40.

Concretely, the drive control means 32 changes the upper limit value of the braking force of the regenerative brake, which is controlled by the regenerative control means 35, in accordance with each drive mode. When the first drive mode is selected by the selection switch 20, the upper limit value of the braking force of the regenerative brake is set at the first upper limit value. When the second drive mode is selected, that upper limit value is set at the second upper limit value which is higher than the first upper limit value. When the third drive mode is selected, moreover, the upper limit value of the braking force of the regenerative brake is set at the third upper limit value which is higher than the second upper limit value. The regenerative control means 35 controls the braking force of the regenerative brake based on the changed upper limit value.

Furthermore, the drive control means 32 sets the shift schedule, which the shift schedule control means 36 refers to, in accordance with each drive mode. When the first drive mode is selected by the selection switch 20, the shift schedule is set to the first shift schedule . When the second drive mode is selected, the shift schedule is set to the second shift schedule. When the third drive mode is selected, the shift schedule is set to the third shift schedule. The second shift schedule is one in which the timing of upshift of each gear stage is set to be earlier than the first shift schedule, and the timing of downshift of each gear stage is set to be later than the first shift schedule. That is, with the second shift schedule, a shift indication line between respective gear stages for indicating upshift and a shift indication line for indicating downshift are set to be on a lower speed side than the first shift schedule. The third shift schedule is one in which the timing of upshift of each gear stage is set to be even earlier than the second shift schedule, and the timing of downshift of each gear stage is set to be even later than the second shift schedule. Based on the shift schedule changed in this manner, the shift schedule control means 36 controls the timing of upshift or downshift of each gear stage in the automatic transmission 4.

Besides, the drive control means 32 sets the limiting value, which the acceleration smoothening means 37 refers to, in accordance with each drive mode. In the present embodiment, the drive control means 32 sets the first limiting value as the above limiting value when the first drive mode is selected by the selection switch 20, sets the second limiting value when the second drive mode is selected, and sets the third limiting value when the third drive mode is selected. Control based on the second limiting value is stronger in limitation on the degree of acceleration than control based on the first limiting value, and control based on the third limiting value is even stronger in limitation on the degree of acceleration than control based on the second limiting value. As described here, acceleration smoothening control conformed to the drive mode is exercised, whereby a difference in fuel consumption according to the drive mode is apt to appear more noticeable, and the occupant such as the driver experiences a change of the drive mode even more easily.

In the present embodiment, moreover, the drive control means 32 permits the activation of the distribution control means 38, the supercharging pressure control means 39, and the air conditioning control means 40 in accordance with the drive mode. Concretely, the drive control means 32 prohibits the activation of all the distribution control means 38, the supercharging pressure control means 39, and the air conditioning control means 40 when the first drive mode is selected by the selection switch 20. When the second drive mode is selected, the drive control means 32 permits only the activation of the air conditioning control means 40. When the third drive mode is selected, the drive control means 32 permits the activation of all the distribution control means 38, the supercharging pressure control means 39, and the air conditioning control means 40.

With the above-described configuration of the vehicle control device 10 according to the present invention, the driver (occupant) merely selects the desired drive mode by a single switch operation, thereby becoming able to arbitrarily change the activation states of neutral control and idle stop control collectively, thus achieving an improvement in usability. In particular, the activation states of neutral control and idle stop control, which contribute highly to fuel economy, and with which the activation of control is relatively easy to experience, are changed in association with the switching of the drive mode. As a result, it becomes easier for the occupant, such as the driver, to experience a difference in fuel consumption according to the drive mode, and a change of the drive mode. This produces the effect that the occupant can detect misoperation of the selection switch 20 or an abnormality in control at an early stage.

Furthermore, the activation states of various fuel saving controls, such as regenerative control, shift schedule control, and acceleration smoothening control, are also changed collectively simply by selecting the drive mode. Thus, a difference in fuel consumption according to the drive mode becomes easy to appear noticeable.

With the present embodiment, moreover, the drive control means 32 permits the activation of more types of the fuel saving drive control means 31 than those upon selection of the first drive mode when the second drive mode is selected by the selection switch 20, and permits the activation of even more types of the fuel saving drive control means 31 than those upon selection of the second drive mode when the third drive mode is selected. Because of these features, a difference in fuel consumption according to the drive mode is apt to appear more noticeable. It is to be noted here that the drive control means 32 may set the types (number) of the fuel saving drive control means 31, permitted in each drive mode, to be constant, and may change, as appropriate, only the activation state of each fuel saving drive control means 31.

The degree of fuel saving in "the second drive mode" and that in "the third drive mode" may be determined, as appropriate, but are preferably set to be nearly equivalent. When fuel consumption is cut by an amount of the order of 10% in "the third drive mode", for example, it is preferred that fuel consumption be cut by an amount of the order of 5% in "the second drive mode". Thanks to this feature, the driver feels the sensation of a change of the drive mode more easily when the drive mode is switched between "the second drive mode" and "the third drive mode".

### (Embodiment 2)

The present embodiment is another example of control by the drive control means 32, namely, a modification of the activation states of the predetermined means constituting the fuel saving drive control means 31 in the respective drive modes.

Concretely, as shown in Fig. 3, the drive control means 32 prohibits the activation of the neutral control means 33 and the idle stop control means 34 (OFF) when the first drive mode is selected by the selection switch 20. When the second drive mode is selected, the drive control means 32 prohibits the activation of the neutral control means 33 (OFF) and permits the activation of the idle stop control means 34 (ON). When the third drive mode is selected, the drive control means 32 permits the activation of both the neutral control means 33 and the idle stop control means 34 (ON).

The above-mentioned controls in the present embodiment as well exhibit the same actions and effects as those in Embodiment 1.

The activation states, in the respective drive modes, of the regenerative control means 35, the shift schedule control means 36, the acceleration smoothening control means 37, the distribution control means 38, the supercharging pressure control means 39, and the air conditioning control means 40 are the same as those in Embodiment 1. Thus, explanations for them will be omitted herein.

### (Embodiment 3)

The present embodiment is still another example of control by the drive control means 32, namely, a modification of the activation states of the predetermined means constituting the fuel saving drive control means 31 in the respective drive modes.

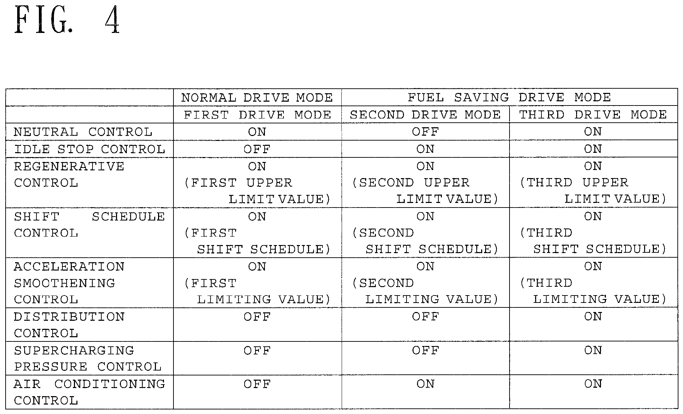

Concretely, as shown in Fig. 4, the drive control means 32 permits the activation of the neutral control means 33 (ON) and prohibits the activation of the idle stop control means 34 (OFF) when the first drive mode is selected by the selection switch 20. When the second drive mode is selected, the drive control means 32 prohibits the activation of the neutral control means 33 (OFF) and permits the activation of the idle stop control means 34 (ON) . When the third drive mode is selected, the drive control means 32 permits the activation of both the neutral control means 33 and the idle stop control means 34 (ON).

It goes without saying that the above-mentioned controls in the present embodiment as well exhibit the same actions and effects as those in Embodiment 1.

In the present embodiment, the selection switch 20 is configured to be capable of selecting any of the first to third drive modes, but may be configured, for example, to be capable of further selecting a "fourth drive mode". For example, it is permissible for the drive control means 32 to prohibit the activation of the neutral control means 33 and the idle stop control means 34, when the fourth drive mode is selected.

In the present embodiment as well, the activation states, in the respective drive modes, of the regenerative control means 35, the shift schedule control means 36, the acceleration smoothening control means 37, the distribution control means 38, the supercharging pressure control means 39, and the air conditioning control means 40 are the same as those in Embodiment 1. Thus, explanations for them will be omitted herein.

### (Embodiment 4)

The present embodiment is an example in which when the vehicle is detected to be in a predetermined travel state, with the second or third drive mode being selected, the drive control means 32 changes, as appropriate, controls over various means constituting the fuel saving drive control means, thereby suppressing a decline in drivability. The same constituent elements as those in the device of Embodiment 1 are assigned the same numerals as in the device of Embodiment 1, and duplicate explanations are omitted.

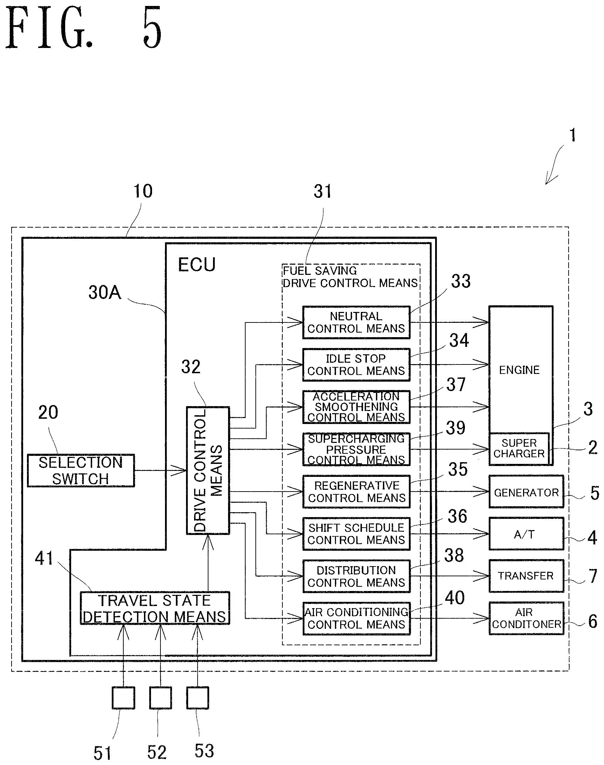

As shown in Fig. 5, an ECU 30A according to the present embodiment is equipped with a travel state detection means 41 as well as a fuel saving drive control means 31 and a drive control means 32.

The travel state detection means 41 detects the travel state of a vehicle 1 based on the detection results of various sensors. In the present embodiment, the travel state detection means 41 detects an "upward sloping road travel" in which the vehicle 1 travels on an upward sloping road, and a "downward sloping road travel" in which the vehicle 1 travels on a downward sloping road, based on the detection results of a torque detection sensor 51 for detecting a torque generated in an engine 3, an acceleration sensor 52 for detecting the acceleration of the vehicle 1, and a gear sensor 53, constituted by a position sensor or the like, for detecting the gear stage of an automatic transmission 4.

When the upward sloping road travel is detected by the travel state detection means 41, with the second drive mode or the third drive mode being selected by a selection switch 20, the drive control means 32 first changes regenerative control by a regenerative control means 35 to suppress the braking force of a regenerative brake.

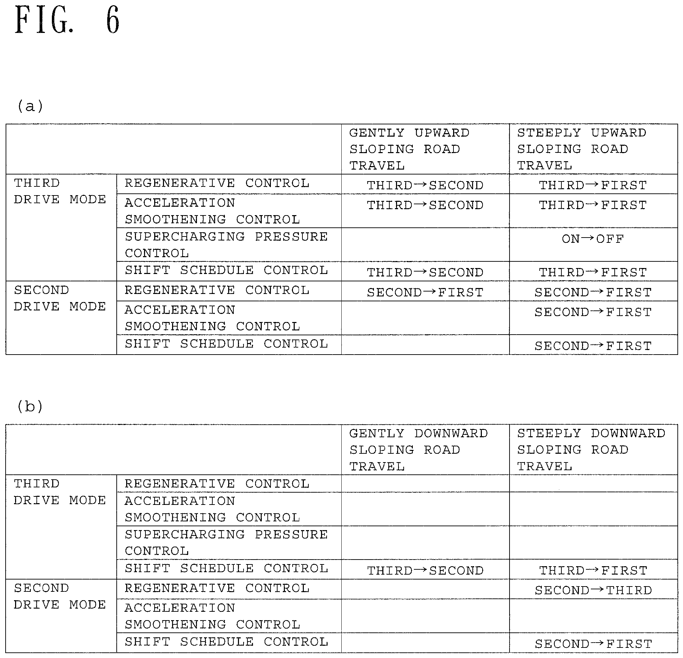

Concretely, when the vehicle 1 is detected by the travel state detection means 41 to be travelling on a gently upward sloping road of a relatively gentle slope (gently upward sloping road travel), with the second drive mode being selected, the drive control means 32 changes the upper limit value of the braking force of the regenerative brake, which is controlled by the regenerative control means 35, from the second upper limit value to the first upper limit value, as shown in Fig. 6(a). Based on the changed upper limit value, the regenerative control means 35 controls the braking force of the regenerative brake.

When the "gently upward sloping road travel" is detected by the travel state detection means 41, with the third drive mode being selected, the drive control means 32 changes the upper limit value of the braking force of the regenerative brake from the third upper limit value to the second upper limit value. The drive control means 32 also changes acceleration smoothening control and shift schedule control. Concretely, the drive control means 32 changes the limiting value, which an acceleration smoothening control means 37 refers to, from the third limiting value to the second limiting value, and also changes the shift schedule, which a shift schedule control means 36 refers to, from the third shift schedule to the second shift schedule. That is, the regenerative control, the acceleration smoothening control, and the shift schedule control are weakened by one stage to be changed into settings for the second drive mode.

When the vehicle 1 is detected by the travel state detection means 41 to be travelling on a steeply upward sloping road of a relatively steep slope (steeply upward sloping road travel), with the second drive mode being selected, the drive control means 32 changes the upper limit value of the braking force of the regenerative brake, which is control led by the regenerative control means 35, from the second upper limit value to the first upper limit value, as shown in Fig. 6(a). The drive control means 32 also changes the acceleration smoothening control and the shift schedule control. Concretely, the drive control means 32 changes the limiting value, which the acceleration smoothening control means 37 references to, from the second limiting value to the first limiting value, and also changes the shift schedule from the second shift schedule to the first shift schedule. That is, the regenerative control, the acceleration smoothening control, and the shift schedule control are weakened by one stage to be changed into settings for the first drive mode. The steeply upward sloping road refers to an upward sloping road, for example, with an inclination degree (road gradient) in excess of 7 to 8%.

When a steeply upward sloping road travel is detected by the travel state detection means 41, with the third drive mode being selected, the drive control means 32 changes the upper limit value of the braking force of the regenerative brake, which is controlled by the regenerative control means 35, from the third upper limit value to the first upper limit value, as shown in Fig. 6(a). Further, the drive control means 32 changes the limiting value, which the acceleration smoothening control means 37 references to, from the third limiting value to the first limiting value, and also changes the shift schedule from the third shift schedule to the first shift schedule. As a result of the change in the shift schedule, a shift indication line between the respective gear stages for indicating upshift is changed to a high speed side, whereby the timing of upshift in the automatic transmission is delayed. In the present embodiment, moreover, the drive control means 32 changes supercharging pressure control from ON to OFF so that the maximum value of the supercharging pressure of a turbocharger 2 is increased.

When the vehicle is detected by the travel state detection means 41 to be travelling on a downward sloping road (downward sloping road travel), with the second or third drive mode being selected, the drive control means 32 first changes regenerative control by the regenerative control means 35 to enhance the braking force of the regenerative brake further.

Concretely, when the vehicle 1 is detected by the travel state detection means 41 to be travelling on a steeply downward sloping road of a relatively steep slope (steeply downward sloping road travel), with the second drive mode being selected, the drive control means 32 changes the upper limit value of the braking force of the regenerative brake, which is controlled by the regenerative control means 35, from the second upper limit value to the third upper limit value, as shown in Fig. 6(b). Also, the drive control means 32 changes the shift schedule from the second shift schedule to the first shift schedule. Because of such a change in the shift schedule, the timing of downshift in the automatic transmission 4 is quickened.

When a steeply downward sloping road travel is detected by the travel state detection means 41, with the third drive mode being selected, the drive control means 32 changes the shift schedule from the third shift schedule to the first shift schedule. That is, the timing of downshift of the automatic transmission 4 is markedly quickened. When the vehicle 1 is detected by the travel state detection means 41 to be travelling on a gently downward sloping road of a relatively gentle slope (gently downward sloping road travel), with the third drive mode being selected, moreover, the drive control means 32 changes the shift schedule from the third shift schedule to the second shift schedule. Based on the changed shift schedule, the shift schedule control means 36 controls the timing of upshift or downshift of each gear stage in the automatic transmission 4.

In the present embodiment, as described above, when the vehicle 1 is detected travelling on an upward sloping road or a downward sloping road, the drive control means changes, as appropriate, controls by the means constituting the fuel saving drive control means. Consequently, undesired deceleration of the engine can be suppressed to inhibit deterioration of drivability and achieve a further fuel saving.

### (Embodiment 5)

The present embodiment is an example in which when sudden braking of the vehicle is detected, with the second or third drive mode being selected, the drive control means 32 changes, as appropriate, controls over various means constituting the fuel saving drive control means, thereby ensuring the safety of the vehicle. The same constituent elements as those in the device of Embodiment 1 are assigned the same numerals as in the device of Embodiment 1, and duplicate explanations are omitted.

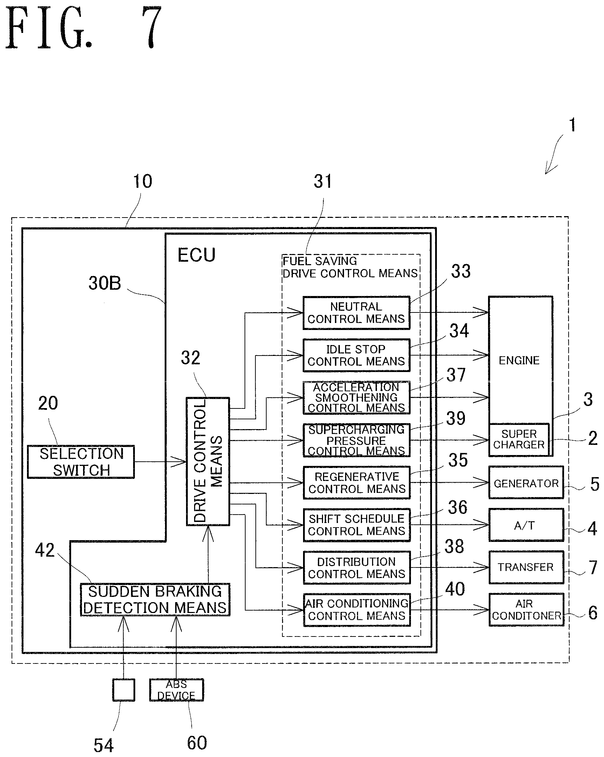

As shown in Fig. 7, an ECU 30B according to the present embodiment is equipped with a sudden braking detection means 42 as well as a fuel saving drive control means 31 and a drive control means 32.

The sudden braking detection means 42 detects the sudden braking of a vehicle 1, namely, a crisis avoidance action of the vehicle 1, based on the detection results of various sensors. In the present embodiment, the sudden braking detection means 42 detects the sudden braking of the vehicle 1 from the detection results of an accelerator opening sensor 54 and the activation status of an ABS (anti-lock brake system) device 60 provided in the vehicle 1. For example, when the accelerator opening is fully closed and the activation of the ABS device 60 is detected, the sudden braking detection means 42 determines that the vehicle 1 has suddenly braked.

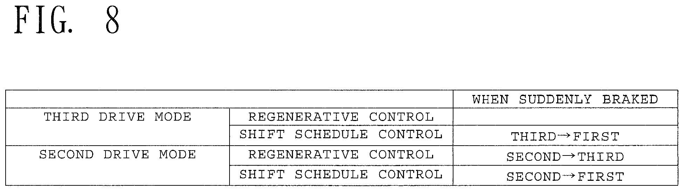

When the sudden braking of the vehicle 1 is detected by the sudden braking detection means 42, with the second drive mode being selected by a selection switch 20, the drive control means 32 changes regenerative control by a regenerative control means 35 and shift schedule control by a shift schedule control means 36. Concretely, when the sudden braking of the vehicle 1 is detected by the sudden braking detection means 42, with the second drive mode being selected, the drive control means 32 changes the upper limit value of the braking force of a regenerative brake, which is controlled by the regenerative control means 35, from the second upper limit value to the third upper limit value, as shown in Fig. 8, to enhance the braking force of the regenerative brake. Further, the drive control means 32 changes the shift schedule from the second shift schedule to the first shift schedule so that the timing of downshift is hastened.

When the sudden braking of the vehicle 1 is detected by the sudden braking detection means 42, with the third drive mode being selected, on the other hand, the drive control means 32 changes only the shift schedule control by the shift schedule control means 36. Concretely, the drive control means 32 changes the shift schedule from the third shift schedule to the first shift schedule to quicken the timing of downshift greatly.

In the present embodiment, as described above, when the sudden braking of the vehicle 1 is detected even during fuel saving drive control, application of an engine brake is facilitated, for example, by quickening the timing of downshift. As a result, the braking distance can be shortened, and the safety of the vehicle 1 improved.

The embodiments of the present invention have been described above, but it is to be understood that the present invention is in no way limited to these embodiments.

### [Explanations of Letters or Numerals]

1 Vehicle
2 Turbocharger
3 Engine
4 Automatic transmission
5 Generator (alternator)
6 Air conditioner
7 Transfer
10 Control device
20 Selection switch
30 ECU
31 Fuel saving drive control means
32 Drive control means
33 Neutral control means
34 Idle stop control means
35 Regenerative control means
36 Shift schedule control means
37 Acceleration smoothening control means
38 Distribution control means
39 Supercharging pressure control means
40 Air conditioning control means
41 Travel state detection means
42 Sudden braking detection means
51 Torque detection sensor
52 Acceleration sensor
53 Gear sensor
54 Accelerator opening sensor
60 ABS device

## Claims

1. A vehicle control device (10), comprising:
selection means (20) for selecting, through an occupant of a vehicle (1), a drive mode for the vehicle (1) from a plurality of drive modes including a first drive mode, a second drive mode taking a fuel saving into more consideration than the first drive mode, and a third drive mode taking a fuel saving into more consideration than the second drive mode; and
drive control means (32) for controlling an activation state of fuel saving drive control means (31) in accordance with the drive mode selected by the selection means (20),
**characterized in that** the fuel saving drive control means (31) includes
neutral control means (33) for bringing an automatic transmission (4) of the vehicle (1) into a neutral state when predetermined neutral conditions are established, and
idle stop control means (34) for automatically stopping an engine of the vehicle when predetermined automatic stop conditions are established, and restarting the engine during automatic stoppage when predetermined restart conditions are established, and
the drive control means (32)
exercises control over activation states of at least the neutral control means (33) and the idle stop control means (34) in accordance with the drive mode selected by the selection means (20), and
prohibits activation of the neutral control means (33) and the idle stop control means (34) when the first drive mode is selected by the selection means (20), permits the activation of the neutral control means (33) and also prohibits the activation of the idle stop control means (34) when the second drive mode is selected, and permits the activation of the idle stop control means (34) when the third drive mode is selected.

2. The vehicle control device (10) according to claim 1, wherein
the fuel saving drive control means (31) includes regenerative control means (35) for controlling a braking force of a regenerative brake of the vehicle (1), and
the drive control means (32)
sets an upper limit value of the braking force of the regenerative brake, which is controlled by the regenerative control means (35), at a second upper limit value higher than a first upper limit value set upon selection of the first drive mode, when the second drive mode is selected by the selection means (20), and
sets the upper limit value of the braking force of the regenerative brake at a third upper limit value higher than the second upper limit value, when the third fuel saving drive mode is selected.

3. The vehicle control device (10) according to claim 2,
further comprising travel state detection means (41) for detecting a travel state of the vehicle,
wherein the drive control means (32) changes the upper limit value of the braking force of the regenerative brake to the first upper limit value when the vehicle is detected by the travel state detection means (41) to be travelling on an upward sloping road, with the second or third drive mode being selected by the selection means (20).

4. The vehicle control device (10) according to any one of claims 1 to 3, wherein
the fuel saving drive control means (31) includes shift schedule control means (36) for controlling a timing of upshift of each gear stage in the automatic transmission of the vehicle based on a preset shift schedule, and
the drive control means (32)
sets the shift schedule to a second shift schedule, in which the timing of upshift of each gear stage is set to be earlier than a first shift schedule set upon selection of the first drive mode, when the second drive mode is selected by the selection means (20), and
sets the shift schedule to a third shift schedule, in which the timing of upshift of each gear stage is set to be even earlier than the second shift schedule, when the third drive mode is selected.

5. The vehicle control device (10) according to any one of claims 1 to 4, wherein
the fuel saving drive control means (31) includes shift schedule control means (36) for controlling a timing of downshift of each gear stage in the automatic transmission (4) of the vehicle (1) based on a preset shift schedule, and
the drive control means (32)
sets the shift schedule to a second shift schedule, in which the timing of downshift of each gear stage is set to be later than a first shift schedule set upon selection of the first drive mode, when the second drive mode is selected by the selection means (20), and
sets the shift schedule to a third shift schedule, in which the timing of downshift of each gear stage is set to be even later than the second shift schedule, when the third drive mode is selected.

6. The vehicle control device (10) according to claim 4 or 5,
further comprising travel state detection means (41) for detecting a travel state of the vehicle,
wherein the drive control means (32) changes the shift schedule to the first shift schedule when the vehicle is detected by the travel state detection means (41) to be travelling on a sloping road, with the second or third drive mode being selected by the selection means (20).

7. The vehicle control device (10) according to any one of claims 4 to 6, wherein
the drive control means (32) changes the shift schedule to the first shift schedule when sudden braking of the vehicle is detected, with the second or third drive mode being selected by the selection means (20).

8. The vehicle control device (10) according to any one of claims 1 to 7, wherein
the fuel saving drive control means (31) includes acceleration smoothening control means (37) for limiting an acceleration degree of the vehicle to be controlled based on an accelerator opening of the vehicle, and
the drive control means (32)
sets a limitation on the acceleration degree by the acceleration smoothening control means (37) at a second limiting value, which is rendered higher than a first limiting value set upon selection of the first drive mode, when the second drive mode is selected by the selection means (20), and
sets the limitation on the acceleration degree by the acceleration smoothening control means (37) at a third limiting value, which is rendered even higher than the second limiting value, when the third drive mode is selected by the selection means (20).

9. The vehicle control device (10) according to any one of claims 1 to 8, **characterized in that**
the drive control means (32)
permits activation of more types of the fuel saving drive control means (31) than those upon selection of the first drive mode when the second drive mode is selected by the selection means (20), and
permits the activation of even more types of the fuel saving drive control means than those upon selection of the second drive mode when the (31) third drive mode is selected.

10. A vehicle control device (10), comprising:
selection means (20) for selecting, through an occupant of a vehicle (1), a drive mode for the vehicle from a plurality of drive modes including a first drive mode, a second drive mode taking a fuel saving into more consideration than the first drive mode, and a third drive mode taking a fuel saving into more consideration than the second drive mode; and
drive control means (32) for controlling an activation state of fuel saving drive control (32) means in accordance with the drive mode selected by the selection means (20),
**characterized in that** the fuel saving drive control means (31) includes
neutral control means (33) for bringing an automatic transmission (4) of the vehicle (1) into a neutral state when predetermined neutral conditions are established, and
idle stop control means (34) for automatically stopping an engine (3) of the vehicle (1) when predetermined automatic stop conditions are established, and restarting the engine (3) during automatic stoppage when predetermined restart conditions are established, and
the drive control means (32)
exercises control over activation states of at least the neutral control means (33) and the idle stop control means (34) in accordance with the drive mode selected by the selection means (20), and
prohibits activation of the neutral control means (33) and the idle stop control means (34) when the first drive mode is selected by the selection means (20),
prohibits the activation of the neutral control means (33) and also permits the activation of the idle stop control means (34) when the second drive mode is selected, and
permits the activation of both the neutral control means (33) and the idle stop control means (34) when the third drive mode is selected.

11. A vehicle control device (10), comprising:
selection means (20) for selecting, through an occupant of a vehicle (1), a drive mode for the vehicle (1) from a plurality of drive modes including a first drive mode, a second drive mode taking a fuel saving into more consideration than the first drive mode, and a third drive mode taking a fuel saving into more consideration than the second drive mode; and
drive control means (32) for controlling an activation state of fuel saving drive control means (31) in accordance with the drive mode selected by the selection means (20),
**characterized in that** the fuel saving drive control means (31) includes
neutral control means (33) for bringing an automatic transmission (4) of the vehicle (1) into a neutral state when predetermined neutral conditions are established, and
idle stop control means (34) for automatically stopping an engine (3) of the vehicle (1) when predetermined automatic stop conditions are established, and restarting the engine during automatic stoppage when predetermined restart conditions are established, and
the drive control means (32)
exercises control over activation states of at least the neutral control means (33) and the idle stop control means (34) in accordance with the drive mode selected by the selection means (20), and
permits activation of the neutral control means (33) and also prohibits activation of the idle stop control means (34) when the first drive mode is selected by the selection means (20),
prohibits the activation of the neutral control means (33) and also permits the activation of the idle stop control means (34) when the second drive mode is selected, and
permits the activation of both the neutral control means (33) and the idle stop control means (34) when the third drive mode is selected.

## Patentansprüche

1. Fahrzeugsteuervorrichtung (10), die aufweist:
eine Auswahleinrichtung (20) zum Auswählen eines Antriebsmodus für ein Fahrzeug (1) aus mehreren Antriebsmodi durch einen Insassen des Fahrzeugs (1), darunter eines ersten Antriebsmodus, eines zweiten Antriebsmodus unter stärkerer Berücksichtigung von Kraftstoffeinsparung als der erste Antriebsmodus und eines dritten Antriebsmodus unter stärkerer Berücksichtigung von Kraftstoffeinsparung als der zweite Antriebsmodus; und
eine Antriebssteuereinrichtung (32) zum Steuern eines Aktivierungszustands einer kraftstoffsparenden Antriebssteuereinrichtung (31) in Übereinstimmung mit dem durch die Auswahleinrichtung (20) ausgewählten Antriebsmodus,
**dadurch gekennzeichnet, dass** die kraftstoffsparende Antriebssteuereinrichtung (31) aufweist:
eine Neutralsteuereinrichtung (33) zum Versetzen eines Automatikgetriebes (4) des Fahrzeugs (1) in einen Neutralzustand, wenn vorbestimmte Neutralbedingungen hergestellt sind, und
eine Leerlaufstopp-Steuereinrichtung (34) zum automatischen Stoppen eines Motors des Fahrzeugs, wenn vorbestimmte automatische Stoppbedingungen hergestellt sind, und Neustarten des Motors während des automatischen Stopps, wenn vorbestimmte Neustartbedingungen hergestellt sind, und
die Antriebssteuereinrichtung (32)
eine Steuerung von Aktivierungszuständen mindestens der Neutralsteuereinrichtung (33) und der Leerlaufstopp-Steuereinrichtung (34) in Übereinstimmung mit dem durch die Auswahleinrichtung (20) ausgewählten Antriebsmodus ausübt und
eine Aktivierung der Neutralsteuereinrichtung (33) und der Leerlaufstopp-Steuereinrichtung (34) verbietet, wenn der erste Antriebsmodus durch die Auswahleinrichtung (20) ausgewählt ist, die Aktivierung der Neutralsteuereinrichtung (33) erlaubt und ferner die Aktivierung der Leerlaufstopp-Steuereinrichtung (34) verbietet, wenn der zweite Antriebsmodus ausgewählt ist, und die Aktivierung der Leerlaufstopp-Steuereinrichtung (34) erlaubt, wenn der dritte Antriebsmodus ausgewählt ist.

2. Fahrzeugsteuervorrichtung (10) nach Anspruch 1, wobei
die kraftstoffsparende Antriebssteuereinrichtung (31) eine Regenerativsteuereinrichtung (35) zum Steuern einer Bremskraft einer Regenerativbremse des Fahrzeugs (1) aufweist und
die Antriebssteuereinrichtung (32)
einen oberen Grenzwert der Bremskraft der Regenerativbremse, die durch die Regenerativsteuereinrichtung (35) gesteuert wird, auf einen zweiten oberen Grenzwert einstellt, der höher als ein erster oberer Grenzwert ist, der bei Auswahl des ersten Antriebsmodus eingestellt ist, wenn der zweite Antriebsmodus durch die Auswahleinrichtung (20) ausgewählt ist, und
den oberen Grenzwert der Bremskraft der Regenerativbremse auf einen dritten oberen Grenzwert einstellt, der höher als der zweite obere Grenzwert ist, wenn der dritte kraftstoffsparende Antriebsmodus ausgewählt ist.

3. Fahrzeugsteuervorrichtung (10) nach Anspruch 2, die ferner eine Fahrzustand-Detektionseinrichtung (41) zum Detektieren eines Fahrzustands des Fahrzeugs aufweist,
wobei die Antriebssteuereinrichtung (32) den oberen Grenzwert der Bremskraft der Regenerativbremse auf den ersten oberen Grenzwert ändert, wenn durch die Fahrzustand-Detektionseinrichtung (41) detektiert wird, dass das Fahrzeug auf einer ansteigenden Straße fährt, wobei der zweite oder dritte Antriebsmodus durch die Auswahleinrichtung (20) ausgewählt ist.

4. Fahrzeugsteuervorrichtung (10) nach einem der Ansprüche 1 bis 3, wobei
die kraftstoffsparende Antriebssteuereinrichtung (31) eine Schaltprogramm-Steuereinrichtung (36) zum Steuern einer Hochschaltzeit jeder Gangstufe im Automatikgetriebe des Fahrzeugs auf der Grundlage eines voreingestellten Schaltprogramms aufweist und
die Antriebssteuereinrichtung (32)
das Schaltprogramm auf ein zweites Schaltprogramm einstellt, in dem die Hochschaltzeit jeder Gangstufe so eingestellt ist, dass sie früher als ein erstes Schaltprogramm liegt, das bei Auswahl des ersten Antriebsmodus eingestellt ist, wenn der zweite Antriebsmodus durch die Auswahleinrichtung (20) ausgewählt ist, und das Schaltprogramm auf ein drittes Schaltprogramm einstellt, in dem die Hochschaltzeit jeder Gangstufe so eingestellt ist, dass sie noch früher als das zweite Schaltprogramm liegt, wenn der dritte Antriebsmodus ausgewählt ist.

5. Fahrzeugsteuervorrichtung (10) nach einem der Ansprüche 1 bis 4, wobei
die kraftstoffsparende Antriebssteuereinrichtung (31) eine Schaltprogramm-Steuereinrichtung (36) zum Steuern einer Herunterschaltzeit jeder Gangstufe im Automatikgetriebe (4) des Fahrzeugs (1) auf der Grundlage eines voreingestellten Schaltprogramms aufweist und
die Antriebssteuereinrichtung (32)
das Schaltprogramm auf ein zweites Schaltprogramm einstellt, in dem die Herunterschaltzeit jeder Gangstufe so eingestellt ist, dass sie später als ein erstes Schaltprogramm liegt, das bei Auswahl des ersten Antriebsmodus eingestellt ist, wenn der zweite Antriebsmodus durch die Auswahleinrichtung (20) ausgewählt ist, und
das Schaltprogramm auf ein drittes Schaltprogramm einstellt, in dem die Herunterschaltzeit jeder Gangstufe so eingestellt ist, dass sie noch später als das zweite Schaltprogramm liegt, wenn der dritte Antriebsmodus ausgewählt ist.

6. Fahrzeugsteuervorrichtung (10) nach Anspruch 4 oder 5,
die ferner eine Fahrzustand-Detektionseinrichtung (41) zum Detektieren eines Fahrzustands des Fahrzeugs aufweist,
wobei die Antriebssteuereinrichtung (32) das Schaltprogramm auf das erste Schaltprogramm ändert, wenn durch die Fahrzustand-Detektionseinrichtung (41) detektiert wird, dass das Fahrzeug auf einer abfallenden Straße fährt, wobei der zweite oder dritte Antriebsmodus durch die Auswahleinrichtung (20) ausgewählt ist.

7. Fahrzeugsteuervorrichtung (10) nach einem der Ansprüche 4 bis 6, wobei
die Antriebssteuereinrichtung (32) das Schaltprogramm auf das erste Schaltprogramm ändert, wenn plötzliches Bremsen des Fahrzeugs detektiert wird, wobei der zweite oder dritte Antriebsmodus durch die Auswahleinrichtung (20) ausgewählt ist.

8. Fahrzeugsteuervorrichtung (10) nach einem der Ansprüche 1 bis 7, wobei
die kraftstoffsparende Antriebssteuereinrichtung (31) eine Beschleunigung ruckfrei machende Steuereinrichtung (37) zum Begrenzen eines Beschleunigungsgrads des zu steuernden Fahrzeugs auf der Grundlage einer Drosselklappenöffnung des Fahrzeugs aufweist und
die Antriebssteuereinrichtung (32)
eine Begrenzung des Beschleunigungsgrads durch die Beschleunigung ruckfrei machende Steuereinrichtung (37) auf einen zweiten Begrenzungswert einstellt, der höher als ein erster Begrenzungswert gestaltet ist, der bei Auswahl des ersten Antriebsmodus eingestellt ist, wenn der zweite Antriebsmodus durch die Auswahleinrichtung (20) ausgewählt ist, und
die Begrenzung des Beschleunigungsgrads durch die Beschleunigung ruckfrei machende Steuereinrichtung (37) auf einen dritten Begrenzungswert einstellt, der noch höher als der zweite Begrenzungswert gestaltet ist, wenn der dritte Antriebsmodus durch die Auswahleinrichtung (20) ausgewählt ist.

9. Fahrzeugsteuervorrichtung (10) nach einem der Ansprüche 1 bis 8, **dadurch gekennzeichnet, dass**
die Antriebssteuereinrichtung (32)
eine Aktivierung von mehr Arten der kraftstoffsparenden Antriebssteuereinrichtung (31) als jenen bei Auswahl des ersten Antriebsmodus erlaubt, wenn der zweite Antriebsmodus durch die Auswahleinrichtung (20) ausgewählt ist, und
die Aktivierung von noch mehr Arten der kraftstoffsparenden Antriebssteuereinrichtung als jenen bei Auswahl des zweiten Antriebsmodus erlaubt, wenn der dritte Antriebsmodus ausgewählt ist.

10. Fahrzeugsteuervorrichtung (10), die aufweist:
eine Auswahleinrichtung (20) zum Auswählen eines Antriebsmodus für ein Fahrzeug aus mehreren Antriebsmodi durch einen Insassen des Fahrzeugs (1), darunter eines ersten Antriebsmodus, eines zweiten Antriebsmodus unter stärkerer Berücksichtigung von Kraftstoffeinsparung als der erste Antriebsmodus und eines dritten Antriebsmodus unter stärkerer Berücksichtigung von Kraftstoffeinsparung als der zweite Antriebsmodus; und
eine Antriebssteuereinrichtung (32) zum Steuern eines Aktivierungszustands einer kraftstoffsparenden Antriebssteuer-Einrichtung in Übereinstimmung mit dem durch die Auswahleinrichtung (20) ausgewählten Antriebsmodus,
**dadurch gekennzeichnet, dass** die kraftstoffsparende Antriebssteuereinrichtung (31) aufweist:
eine Neutralsteuereinrichtung (33) zum Versetzen eines Automatikgetriebes (4) des Fahrzeugs (1) in einen Neutralzustand, wenn vorbestimmte Neutralbedingungen hergestellt sind, und
eine Leerlaufstopp-Steuereinrichtung (34) zum automatischen Stoppen eines Motors (3) des Fahrzeugs (1), wenn vorbestimmte automatische Stoppbedingungen hergestellt sind, und Neustarten des Motors (3) während des automatischen Stopps, wenn vorbestimmte Neustartbedingungen hergestellt sind, und
die Antriebssteuereinrichtung (32)
eine Steuerung von Aktivierungszuständen mindestens der Neutralsteuereinrichtung (33) und der Leerlaufstopp-Steuereinrichtung (34) in Übereinstimmung mit dem durch die Auswahleinrichtung (20) ausgewählten Antriebsmodus ausübt und
eine Aktivierung der Neutralsteuereinrichtung (33) und der Leerlaufstopp-Steuereinrichtung (34) verbietet, wenn der erste Antriebsmodus durch die Auswahleinrichtung (20) ausgewählt ist,
die Aktivierung der Neutralsteuereinrichtung (33) verbietet und ferner die Aktivierung der Leerlaufstopp-Steuereinrichtung (34) erlaubt, wenn der zweite Antriebsmodus ausgewählt ist, und
die Aktivierung sowohl der Neutralsteuereinrichtung (33) als auch der Leerlaufstopp-Steuereinrichtung (34) erlaubt, wenn der dritte Antriebsmodus ausgewählt ist.

11. Fahrzeugsteuervorrichtung (10), die aufweist:
eine Auswahleinrichtung (20) zum Auswählen eines Antriebsmodus für ein Fahrzeug (1) aus mehreren Antriebsmodi durch einen Insassen des Fahrzeugs (1), darunter eines ersten Antriebsmodus, eines zweiten Antriebsmodus unter stärkerer Berücksichtigung von Kraftstoffeinsparung als der erste Antriebsmodus und eines dritten Antriebsmodus unter stärkerer Berücksichtigung von Kraftstoffeinsparung als der zweite Antriebsmodus; und
eine Antriebssteuereinrichtung (32) zum Steuern eines Aktivierungszustands einer kraftstoffsparenden Antriebssteuereinrichtung (31) in Übereinstimmung mit dem durch die Auswahleinrichtung (20) ausgewählten Antriebsmodus,
**dadurch gekennzeichnet, dass** die kraftstoffsparende Antriebssteuereinrichtung (31) aufweist:
eine Neutralsteuereinrichtung (33) zum Versetzen eines Automatikgetriebes (4) des Fahrzeugs (1) in einen Neutralzustand, wenn vorbestimmte Neutralbedingungen hergestellt sind, und
eine Leerlaufstopp-Steuereinrichtung (34) zum automatischen Stoppen eines Motors (3) des Fahrzeugs (1), wenn vorbestimmte automatische Stoppbedingungen hergestellt sind, und Neustarten des Motors während des automatischen Stopps, wenn vorbestimmte Neustartbedingungen hergestellt sind, und
die Antriebssteuereinrichtung (32)
eine Steuerung von Aktivierungszuständen mindestens der Neutralsteuereinrichtung (33) und der Leerlaufstopp-Steuereinrichtung (34) in Übereinstimmung mit dem durch die Auswahleinrichtung (20) ausgewählten Antriebsmodus ausübt und
eine Aktivierung der Neutralsteuereinrichtung (33) erlaubt und ferner eine Aktivierung der Leerlaufstopp-Steuereinrichtung (34) verbietet, wenn der erste Antriebsmodus durch die Auswahleinrichtung (20) ausgewählt ist,
die Aktivierung der Neutralsteuereinrichtung (33) verbietet und ferner die Aktivierung der Leerlaufstopp-Steuereinrichtung (34) erlaubt, wenn der zweite Antriebsmodus ausgewählt ist, und
die Aktivierung sowohl der Neutralsteuereinrichtung (33) als auch der Leerlaufstopp-Steuereinrichtung (34) erlaubt, wenn der dritte Antriebsmodus ausgewählt ist.

## Revendications

1. Dispositif de commande de véhicule (10), comprenant :
un moyen de sélection (20) pour sélectionner, par l'intermédiaire d'un occupant d'un véhicule (1), un mode de conduite pour le véhicule (1), parmi une pluralité de modes de conduite incluant un premier mode de conduite, un deuxième mode de conduite prenant plus en considération une économie de carburant que le premier mode de conduite, et un troisième mode de conduite prenant plus en considération une économie de carburant que le deuxième mode de conduite ; et
un moyen de commande de conduite (32) pour commander un état d'activation d'un moyen de commande de conduite économique en carburant (31) selon le mode de conduite sélectionné par le moyen de sélection (20) ;
**caractérisé en ce que** le moyen de commande de conduite économique en carburant (31) inclut :
un moyen de commande de neutre (33) pour amener une transmission automatique (4) du véhicule (1) dans un état neutre lorsque des conditions neutres prédéterminées sont établies ; et
un moyen de commande d'arrêt au ralenti (34) pour arrêter automatiquement un moteur du véhicule lorsque des conditions d'arrêt automatique prédéterminées sont établies, et pour redémarrer le moteur au cours d'un arrêt automatique lorsque des conditions de redémarrage prédéterminées sont établies ; et
dans lequel le moyen de commande de conduite (32) :
exerce un contrôle sur des états d'activation d'au moins le moyen de commande de neutre (33) et le moyen de commande d'arrêt au ralenti (34) selon le mode de conduite sélectionné par le moyen de sélection (20) ; et
interdit l'activation du moyen de commande de neutre (33) et du moyen de commande d'arrêt au ralenti (34) lorsque le premier mode de conduite est sélectionné par le moyen de sélection (20), permet l'activation du moyen de commande de neutre (33) et interdit également l'activation du moyen de commande d'arrêt au ralenti (34) lorsque le deuxième mode de conduite est sélectionné, et permet l'activation du moyen de commande d'arrêt au ralenti (34) lorsque le troisième mode de conduite est sélectionné.

2. Dispositif de commande de véhicule (10) selon la revendication 1, dans lequel
le moyen de commande de conduite économique en carburant (31) inclut un moyen de commande à récupération d'énergie (35) pour commander une force de freinage d'un frein à récupération d'énergie du véhicule (1) ; et
le moyen de commande de conduite (32) :
définit une valeur limite supérieure de la force de freinage du frein à récupération d'énergie, laquelle est commandée par le moyen de commande à récupération d'énergie (35), sur une deuxième valeur limite supérieure, plus élevée qu'une première valeur limite supérieure définie suite à la sélection du premier mode de conduite, lorsque le deuxième mode de conduite est sélectionné par le moyen de sélection (20) ; et
définit la valeur limite supérieure de la force de freinage du frein à récupération d'énergie sur une troisième valeur limite supérieure, plus élevée que la deuxième valeur limite supérieure, lorsque le troisième mode de conduite économique en carburant est sélectionné.

3. Dispositif de commande de véhicule (10) selon la revendication 2,
comprenant en outre un moyen de détection d'état de marche (41) pour détecter un état de marche du véhicule ;
dans lequel le moyen de commande de conduite (32) remplace la valeur limite supérieure de la force de freinage du frein à récupération d'énergie par la première valeur limite supérieure lorsque le moyen de détection d'état de marche (41) détecte que le véhicule se déplace sur une route inclinée ascendante, où le deuxième mode de conduite ou le troisième mode de conduite est sélectionné par le moyen de sélection (20).

4. Dispositif de commande de véhicule (10) selon l'une quelconque des revendications 1 à 3, dans lequel :
le moyen de commande de conduite économique en carburant (31) inclut un moyen de commande de programme de changement de vitesse (36) pour commander une temporisation de montée en régime de chaque étage de rapport dans la transmission automatique du véhicule sur la base d'un programme de changement de vitesse prédéfini ; et
le moyen de commande de conduite (32) :
définit le programme de changement de vitesse sur un deuxième programme de changement de vitesse, dans lequel la temporisation de montée en régime de chaque étage de rapport est définie de manière à intervenir plus tôt qu'un premier programme de changement de rapport défini suite à la sélection du premier mode de conduite, lorsque le deuxième mode de conduite est sélectionné par le moyen de sélection (20) ; et
définit le programme de changement de vitesse sur un troisième programme de changement de vitesse, dans lequel la temporisation de montée en régime de chaque étage de rapport est définie de manière à intervenir encore plus tôt que le deuxième programme de changement de vitesse, lorsque le troisième mode de conduite est sélectionné.

5. Dispositif de commande de véhicule (10) selon l'une quelconque des revendications 1 à 4, dans lequel :
le moyen de commande de conduite économique en carburant (31) inclut un moyen de commande de programme de changement de vitesse (36) pour commander une temporisation de rétrogradation de chaque étage de rapport dans la transmission automatique (4) du véhicule (1) sur la base d'un programme de changement de vitesse prédéfini ; et
le moyen de commande de conduite (32) :
définit le programme de changement de vitesse sur un deuxième programme de changement de vitesse, dans lequel la temporisation de rétrogradation de chaque étage de rapport est définie de manière à intervenir plus tard qu'un premier programme de changement de vitesse défini suite à la sélection du premier mode de conduite, lorsque le deuxième mode de conduite est sélectionné par le moyen de sélection (20) ; et
définit le programme de changement de vitesse sur un troisième programme de changement de vitesse, dans lequel la temporisation de rétrogradation de chaque étage de rapport est définie de manière à intervenir encore plus tard que le deuxième programme de changement de vitesse, lorsque le troisième mode de conduite est sélectionné.

6. Dispositif de commande de véhicule (10) selon la revendication 4 ou 5,
comprenant en outre un moyen de détection d'état de marche (41) pour détecter un état de marche du véhicule ;
dans lequel le moyen de commande de conduite (32) remplace le programme de changement de vitesse par le premier programme de changement de vitesse lorsque le moyen de détection d'état de marche (41) détecte que le véhicule se déplace sur une route inclinée, où le deuxième mode de conduite ou le troisième mode de conduite est sélectionné par le moyen de sélection (20).

7. Dispositif de commande de véhicule (10) selon l'une quelconque des revendications 4 à 6, dans lequel :
le moyen de commande de conduite (32) remplace le programme de changement de vitesse par le premier programme de changement de vitesse lorsqu'un freinage brusque du véhicule est détecté, où le deuxième mode de conduite ou le troisième mode de conduite est sélectionné par le moyen de sélection (20).

8. Dispositif de commande de véhicule (10) selon l'une quelconque des revendications 1 à 7, dans lequel :
le moyen de commande de conduite économique en carburant (31) inclut un moyen de commande de lissage d'accélération (37) pour limiter un degré d'accélération du véhicule devant être commandé sur la base d'une ouverture d'accélérateur du véhicule ; et
le moyen de commande de conduite (32) :
définit une limitation du degré d'accélération par le moyen de commande de lissage d'accélération (37) sur une deuxième valeur de limitation, qui est rendue supérieure à une première valeur de limitation définie suite à la sélection du premier mode de conduite, lorsque le deuxième mode de conduite est sélectionné par le moyen de sélection (20) ; et
définit la limitation du degré d'accélération par le moyen de commande de lissage d'accélération (37) sur une troisième valeur de limitation, qui est rendue encore plus élevée que la deuxième valeur de limitation, lorsque le troisième mode de conduite est sélectionné par le moyen de sélection (20).

9. Dispositif de commande de véhicule (10) selon l'une quelconque des revendications 1 à 8, **caractérisé en ce que** :
le moyen de commande de conduite (32) :
permet l'activation de plus de types du moyen de commande de conduite économique en carburant (31) que ceux intervenant lors de la sélection du premier mode de conduite lorsque le deuxième mode de conduite est sélectionné par le moyen de sélection (20) ; et
permet l'activation d'encore plus de types du moyen de commande de conduite économique en carburant que ceux intervenant lors de la sélection du deuxième mode de conduite lorsque le troisième mode de conduite est sélectionné.

10. Dispositif de commande de véhicule (10), comprenant :
un moyen de sélection (20) pour sélectionner, par l'intermédiaire d'un occupant d'un véhicule (1), un mode de conduite pour le véhicule, parmi une pluralité de modes de conduite incluant un premier mode de conduite, un deuxième mode de conduite prenant plus en considération une économie de carburant que le premier mode de conduite, et un troisième mode de conduite prenant plus en considération une économie de carburant que le deuxième mode de conduite ; et
un moyen de commande de conduite (32) pour commander un état d'activation d'un moyen de commande de conduite économique en carburant selon le mode de conduite sélectionné par le moyen de sélection (20);
**caractérisé en ce que** le moyen de commande de conduite économique en carburant (31) inclut :
un moyen de commande de neutre (33) pour amener une transmission automatique (4) du véhicule (1) dans un état neutre lorsque des conditions neutres prédéterminées sont établies ; et
un moyen de commande d'arrêt au ralenti (34) pour arrêter automatiquement un moteur (3) du véhicule (1) lorsque des conditions d'arrêt automatique prédéterminées sont établies, et pour redémarrer le moteur (3) au cours d'un arrêt automatique lorsque des conditions de redémarrage prédéterminées sont établies ; et
dans lequel le moyen de commande de conduite (32) :
exerce un contrôle sur des états d'activation d'au moins le moyen de commande de neutre (33) et le moyen de commande d'arrêt au ralenti (34) selon le mode de conduite sélectionné par le moyen de sélection (20) ; et
interdit l'activation du moyen de commande de neutre (33) et du moyen de commande d'arrêt au ralenti (34) lorsque le premier mode de conduite est sélectionné par le moyen de sélection (20) ;
interdit l'activation du moyen de commande de neutre (33) et permet également l'activation du moyen de commande d'arrêt au ralenti (34) lorsque le deuxième mode de conduite est sélectionné ; et
permet l'activation à la fois du moyen de commande de neutre (33) et du moyen de commande d'arrêt au ralenti (34) lorsque le troisième mode de conduite est sélectionné.

11. Dispositif de commande de véhicule (10), comprenant :
un moyen de sélection (20) pour sélectionner, par l'intermédiaire d'un occupant d'un véhicule (1), un mode de conduite pour le véhicule (1), parmi une pluralité de modes de conduite incluant un premier mode de conduite, un deuxième mode de conduite prenant plus en considération une économie de carburant que le premier mode de conduite, et un troisième mode de conduite prenant plus en considération une économie de carburant que le deuxième mode de conduite ; et
un moyen de commande de conduite (32) pour commander un état d'activation d'un moyen de commande de conduite économique en carburant (31) selon le mode de conduite sélectionné par le moyen de sélection (20) ;
**caractérisé en ce que** le moyen de commande de conduite économique en carburant (31) inclut :
un moyen de commande de neutre (33) pour amener une transmission automatique (4) du véhicule (1) dans un état neutre lorsque des conditions neutres prédéterminées sont établies ; et
un moyen de commande d'arrêt au ralenti (34) pour arrêter automatiquement un moteur (3) du véhicule (1) lorsque des conditions d'arrêt automatique prédéterminées sont établies, et pour redémarrer le moteur au cours d'un arrêt automatique lorsque des conditions de redémarrage prédéterminées sont établies ; et
dans lequel le moyen de commande de conduite (32) :
exerce un contrôle sur des états d'activation d'au moins le moyen de commande de neutre (33) et le moyen de commande d'arrêt au ralenti (34) selon le mode de conduite sélectionné par le moyen de sélection (20) ; et
permet l'activation du moyen de commande de neutre (33) et interdit également l'activation du moyen de commande d'arrêt au ralenti (34) lorsque le premier mode de conduite est sélectionné par le moyen de sélection (20) ;
interdit l'activation du moyen de commande de neutre (33) et permet également l'activation du moyen de commande d'arrêt au ralenti (34) lorsque le deuxième mode de conduite est sélectionné ; et
permet l'activation à la fois du moyen de commande de neutre (33) et du moyen de commande d'arrêt au ralenti (34) lorsque le troisième mode de conduite est sélectionné.
